# EUROPÄISCHE PATENTANMELDUNG

(11) **EP 4 700 797 A1**
(43) Veröffentlichungstag der Anmeldung: **25.02.2026**
(21) Anmeldenummer: 25177317.2
(22) Anmeldetag: 19.05.2025
(51) Int. Cl.: H01B 1/24, F16J 15/3228, F16J 15/3284

(54) **LEITFÄHIGES ELEMENT FÜR EINEN WELLENERDUNGSRING UND VERFAHREN ZU SEINER HERSTELLUNG**

(30) Priorität: 17.05.2024 CN 202410614714
(71) Anmelder: KACO GmbH + Co. KG, 74912 Kirchardt (DE); Jiaxing Yide Long Fluorine Technology Co., Ltd., Jiaxing City, Zhejiang Province (CN)
(72) Erfinder: Lu, Jiefei, Jiangxing (CN); Wen, Shufa, Jiangxing (CN); Qian, Sheng, Jiangxing (CN)
(74) Vertreter: Patentanwälte Jackisch-Kohl und Kohl

(57) **Zusammenfassung**

Die Erfindung betrifft ein leitfähiges Element für einen Wellenerdungsring, welches Polytetrafluorethylen (PTFE) und elektrisch leitfähige Füllstoffen umfasst.

Insbesondere enthält das leitfähige Element für einen Wellenerdungsring nach Masse 70 bis 80 Teile PTFE, 10 bis 20 Teile Kohlefasern sowie 0,05 bis 0,1 Teile leitfähigen Kohlenstoff.

Durch diese Zusammensetzung wird eine mechanisch stabile und zugleich elektrisch leitfähige Struktur bereitgestellt, die eine zuverlässige Ableitung von elektrischen Strömen oder statischen Ladungen über die Welle ermöglicht. Das Element eignet sich insbesondere für den Einsatz in Wellenerdungsringen zur Vermeidung von Lagerschäden in rotierenden Maschinen.

## Beschreibung

Die vorliegende Erfindung gehört zum Gebiet der neuen Werkstofftechnologie und betrifft insbesondere ein leitfähiges Element für einen Wellenerdungsring und ein Verfahren zu dessen Herstellung.

Bei laufendem Motor entsteht zwischen der Motorwelle und dem Motorgehäuse Wellenspannung. Der Ölfilm im Motorlager reißt leicht, sobald die Wellenspannung einen bestimmten Wert überschreitet. Es entsteht schlagartig ein hoher Wellenstrom, das Motorlager korrodiert und fällt aufgrund eines anormalen Temperaturanstiegs vorzeitig aus. Lagerschäden während des Motorbetriebs können sich verschlimmern, wenn das Lager elektrisch korrodiert, das Laufgeräusch des Motors aufgrund seines geringen Gewichts laut ist, das Lager aufgrund seines hohen Gewichts beschädigt wird und die Stromversorgung unterbrochen wird.

Der von der rotierenden Motorwelle erzeugte Wellenstrom wird über den Wellenerdungsring zum Motorgehäuse geführt und dort geerdet. Der Wellenerdungsring kann die Lebensdauer der Motorwelle verlängern und eine Verkürzung der Lebensdauer und Leistungsbeeinträchtigung der Motorwelle durch Lagerkorrosion verhindern.

Das leitfähige Element des herkömmlichen Wellenerdungsrings ist eine leitfähige Faser oder Kohlebürste. Die Verwendung leitfähiger Fasern erfordert die Herstellung komplexer und teurer Wellenerdungsringe. Im Betrieb kommt es zu Faserablösungen der leitfähigen Fasern, zu Kohlestaubablösungen der Kohlebürsten, zu Schäden am gesamten System und zu einem Totalausfall. Problematisch bei leitfähigen Fasern ist jedoch auch die Änderung der Drehrichtung der Welle, da sich die Fasern nur schwer durch entsprechende Justierung der Drehrichtung anpassen lassen.

Die Erfindung zielt darauf ab, die Probleme des Standes der Technik zu lösen und stellt ein leitfähiges Element für einen Wellenerdungsring sowie ein Verfahren zu dessen Herstellung bereit.

Zur Erreichung dieses Ziels wird folgendes technische Lösungskonzept vorgeschlagen:
Das leitfähige Element des Wellenerdungsrings besteht aus den folgenden Materialien in Massenanteilen:
70-80 Teile PTFE, 10-20 Teile Kohlefaser, 0,05-0,1 Teile leitfähiger Kohlenstoff.

Diese Materialkombination gewährleistet eine zugleich elektrisch leitfähige, verschleißfeste und prozessstabile Struktur, die sich besonders für den Einsatz in rotierenden Dichtsystemen eignet.

Ein Herstellungsverfahren für ein leitfähiges Element eines Wellenerdungsrings umfasst die folgenden Schritte:
S1, Mischen von Tetrafluorethylen, Kohlenstofffasern und leitfähigem Kohlenstoff im richtigen Verhältnis;
[0010] s2, Übertragen der gemischten und gerührten Materialien in einen Formhohlraum einer entsprechenden Matrize, Formen durch einen Kompressionsformprozess und Formen eines vorgeformten Rohlings, wobei die Formtemperatur auf 19-29 °C geregelt wird;
[0011] S3, Einlegen des vorgeformten Rohlings in einen Sinterofen, Erhitzen des vorgeformten Rohlings in einer Hochtemperaturumgebung im Ofen, wobei die Sinterwärmeerhaltungstemperatur 330-380 °C beträgt, die Sinterzeit 5-20 Stunden und die Wärmeerhaltungszeit 2 Stunden beträgt, und schließlich Erhalten eines fertigen Produkts;
S4: Je nach erforderlicher Spezifikation und Größe wird das fertige Produkt Feinschneid- und Polierprozessschritten unterzogen und schließlich wird das erforderliche leitfähige Element erhalten.

Bei dem obigen Verfahren zur Herstellung des leitfähigen Elements des Wellenerdungsrings werden in Schritt S1 das gefrorene und zerkleinerte Tetrafluorethylen in Mikrogröße, die Kohlenstofffaser und der leitfähige Kohlenstoff in Nanogröße im richtigen Verhältnis gemischt.

Bei dem Herstellungsverfahren für das leitfähige Element des Wellenerdungsrings wird in Schritt S1 3-5 Mal bei hoher Geschwindigkeit in einem Mischer gerührt, die Rührzeit wird auf jeweils 35-45 Sekunden eingestellt, die Gesamtzeit wird auf 120-200 Sekunden eingestellt, die Rührgeschwindigkeit beträgt 1000-2000 U/min und die Siebvorgänge erfolgen 1-4 Mal.

Bei dem obigen Verfahren zur Herstellung des leitfähigen Elements des Wellenerdungsrings wird in Schritt S2 der Formdruck auf 40-50 MPa geregelt.

Bei dem obigen Verfahren zur Herstellung des leitfähigen Elements für den Wellenerdungsring wird in Schritt S3 die Temperaturanstiegs- und -abfallrate auf 1-10 °C/min geregelt.

Bei dem obigen Verfahren zur Herstellung des leitfähigen Elements für den Wellenerdungsring wird in Schritt S2 die Formtemperatur auf 23-28 °C geregelt.

Gegenüber dem Stand der Technik weist die Anwendung folgende Vorteile auf:
1. Aufgrund des inhärenten Memory-Effekts des PTFE-Elements ist dieses bestrebt, in seine ursprüngliche Position, d. h. die Scheibenform, zurückzukehren. Dies hat den Vorteil, dass das PTFE-Element nach elastischer Verformung seines radial inneren Bereichs bzw. seines radial äußeren Bereichs neben dem Lager bei unterschiedlicher Einbaulage am zweiten mechanischen Element anliegen kann. Durch den Memory-Effekt bleibt das PTFE-Element mit der entsprechenden Rückstellkraft jederzeit zuverlässig mit dem entsprechenden Maschinenbauteil verbunden, so dass eine zuverlässige Ableitung der am Lager entstehenden Ladung bzw. Induktionsspannung gewährleistet ist.
2. In der Arbeitsumgebung eines ölgekühlten Motors enthält Öl verschiedene Additive, hat komplexe chemische Komponenten, weist die für den Kontakt mit Produkten erforderliche hohe chemische Stabilität auf und kann chemisch mit ATF-Öl kompatibel sein. PTFE-Artikel hingegen sind chemisch extrem inert und reagieren kaum mit Chemikalien.
3. Das mit Kohlefasern und nanoleitfähigem Kohlenstoff gefüllte und modifizierte PTFE-Material weist einen niedrigen Reibungskoeffizienten und eine gute Verschleißfestigkeit auf. Die Kohlefasern fixieren das Gleiten der PTFE-Moleküle und erhöhen die Verschleißfestigkeit des PTFE. PTFE selbst weist einen niedrigen Reibungskoeffizienten auf. Die Lebensdauer der Komponente wird verlängert.
4. Die spezifische Oberfläche des leitfähigen Kohlenstoffs ist groß, und der leitfähige Kohlenstoff kann stärker in einer isolierenden Matrix mit größerer Masse dispergiert werden, wenn dem leitfähigen Kohlenstoff andere leitfähige Materialien mit der gleichen Masse zugesetzt werden .

Die technischen Lösungen in den Ausführungsformen der vorliegenden Erfindung sind klar und vollständig beschrieben. Es ist offensichtlich, dass die beschriebenen Ausführungsformen nur einige Ausführungsformen der vorliegenden Erfindung darstellen, nicht jedoch alle Ausführungsformen. Alle weiteren Ausführungsformen, die der Fachmann auf der Grundlage der Ausführungsformen der Erfindung ohne eigene erfinderische Tätigkeit umsetzen kann, fallen in den Schutzumfang der Erfindung.

Das leitfähige Element des Wellenerdungsrings besteht aus den folgenden Materialien in Massenanteilen: 70 - 80 Teile PTFE, 10 - 20 Teile Kohlefaser und 0,05 - 0,1 Teile leitfähiger Kohlenstoff.

Die Zugabe von Kohlenstofffaserfüllstoff und leitfähigem Kohlenstoff im Nanomaßstab verleiht dem PTFE-Verbundwerkstoff eine einzigartige Leistung und Funktion. Die hierin beschriebenen Kohlenstofffasern sind Kohlenstofffaserfüllstoffe.

Der Füllstoff bietet durch die extrem niedrige Oberflächenspannung eine hervorragende Benetzbarkeit der Grenzfläche für PTFE, die Verbindung zwischen dem Füllstoff und PTFE ist aufgrund der hohen Grenzflächenkompatibilität und der niedrigen Oberflächenverbindungsenergie dichter, das Ablöse- und Schichtungsphänomen an der Grenzfläche wird wirksam verhindert und die enge Verbindung erhöht nicht nur die Gesamtfestigkeit des Materials, sondern verbessert auch die Verschleißfestigkeit und Haltbarkeit des Materials.

Der Füllstoff verbessert die Leistung des PTFE-Verbundwerkstoffs durch die Bindungswirkung zwischen den Molekülketten zusätzlich. Diese winzigen Füllstoffpartikel sind gleichmäßig in der PTFE-Matrix verteilt, bilden eine brückenähnliche Struktur und übertragen und verteilen äußere Kräfte effektiv. Der Verstärkungseffekt verbessert die mechanischen Eigenschaften des Materials, sodass der PTFE-Verbundwerkstoff bei Belastung stabiler ist und das Ablösen der Verschleißfläche reduziert wird.

Die Zugabe von nanoskaligem leitfähigem Kohlenstoff verleiht dem PTFE-Verbundwerkstoff zusätzlich Leitfähigkeit. Der nanoskalige leitfähige Kohlenstoff dient als hocheffiziente Leitmatrix, wodurch der Oberflächenwiderstand des Materials auf unter 10⁻³ gesenkt werden kann und die Anwendungsaussichten des PTFE-Verbundwerkstoffs in den Bereichen Elektronik und Elektrizität erweitert werden. Der leitfähige Kohlenstoff ist gleichmäßig im Material verteilt und eng verbunden, wodurch die Leitfähigkeit verbessert und die elektromagnetische Abschirmung sowie die antistatischen Eigenschaften verbessert werden.

Der synergistische Effekt des anorganischen modifizierten Füllstoffs und des leitfähigen Kohlenstoffs im Nanomaßstab führt dazu, dass das PTFE-Verbundmaterial hinsichtlich der mechanischen Eigenschaften, der Verschleißfestigkeit, der Leitfähigkeit und dergleichen deutlich verbessert wird.

Darüber hinaus dient das leitfähige Element des Wellenerdungsrings unter der Komponente der Anwendung speziell dazu, statische Elektrizität zu beseitigen, die zwischen der rotierenden Motorwelle und dem Motorgehäuse entsteht.

Ein Herstellungsverfahren für ein leitfähiges Element eines Wellenerdungsrings umfasst die folgenden Schritte:
S1: Tetrafluorethylen, Kohlenstofffasern und leitfähigen Kohlenstoff im richtigen Verhältnis mischen und 3-5 Mal bei hoher Geschwindigkeit in einem Mischer rühren, wobei die Rührzeit jedes Mal auf 35-45 Sekunden eingestellt wird, die Gesamtzeit auf 120-200 Sekunden eingestellt wird, die Rührgeschwindigkeit 1000-2000 U/min beträgt und die Siebzeit 1-4 Mal beträgt.

Die Auswahl dieser Rohstoffe basiert auf ihren einzigartigen physikalischen und chemischen Eigenschaften, der ausgezeichneten thermischen Stabilität und chemischen Inertheit von Polytetrafluorethylen, der hohen Festigkeit und elektrischen Leitfähigkeit von Kohlenstofffasern und der effizienten Wärmeleitfähigkeit von leitfähigem Kohlenstoff im Nanomaßstab. Die Rohstoffe werden in einem Mischer mit hoher Geschwindigkeit gerührt, um eine gleichmäßige Verteilung und ausreichenden Kontakt der Komponenten sicherzustellen.

Um die Leitfähigkeit des leitfähigen Kohlenstoffs zu verbessern, benötigen wir nanometergroßen leitfähigen Kohlenstoff mit geringem Volumen und großer spezifischer Oberfläche. Der leitfähige Kohlenstoff wird zerkleinert, und nach der Luftstromzerkleinerung erhält man leitfähigen Kohlenstoff mit einem Durchmesser von etwa 100 Nanometern. Das gefrorene Polytetrafluorethylen wird zerkleinert, um mikrometergroßes Polytetrafluorethylen zu erhalten, sodass sich das gefrorene Polytetrafluorethylen und das mikrometergroße Polytetrafluorethylen gut miteinander vermischen lassen.

Darüber hinaus werden das gefrorene und zerkleinerte Tetrafluorethylen im Mikromaßstab, die Kohlenstofffaser und der leitfähige Kohlenstoff im Nanomaßstab im richtigen Verhältnis gemischt.

Das gefrorene Polytetrafluorethylen-Suspensionsmaterial ist stärker dispergiert, Partikel können nicht miteinander verkleben, und der Einfluss auf die nachfolgende Vermischung ist geringer. Die spezifische Oberfläche des Nanomaterials ist groß, und zu viel leitfähiger Kohlenstoff kann leicht zur Aggregation von Polytetrafluorethylen führen, sodass eine Aggregation durch den Anteil von PTFE, Kohlenstofffasern und leitfähigem Kohlenstoff vermieden werden kann. Darüber hinaus dienen Kohlenstofffasern hauptsächlich der Verschleißfestigkeit. Je höher das Verhältnis, desto größer der Reibungskoeffizient und desto stärker wird die Leistung des Lagers beeinträchtigt.

S2: Übertragen der gemischten und gerührten Materialien in einen Formhohlraum einer entsprechenden Matrize, Formen durch ein Kompressionsformverfahren und Formen eines vorgeformten Rohlings, wobei die Formtemperatur auf 19-29 °C geregelt wird; vorzugsweise wird die Formtemperatur auf 23-28 °C geregelt und der Formdruck auf 40-50 MPa geregelt.

Der Grund hierfür liegt darin, dass PTFE bei Temperaturen zwischen 19 °C und 30 °C einen Phasenübergang durchläuft. Bei Temperaturen unter 19 °C liegt PTFE in einem triklinen System vor, die Anzahl der unabhängigen Elastizitätskonstanten des triklinen Systems beträgt 21, bei Temperaturen zwischen 19 °C und 29 °C liegt PTFE in einem hexagonalen System vor, die unabhängige Elastizitätskonstante des hexagonalen Systems beträgt 5. Existieren in PTFE zwei Kristallsysteme, kommt es beim Pressen sehr leicht zu Rissen. Um das hexagonale System des PTFE zu erhalten, muss die Presstemperatur zwischen 23 °C und 28 °C geregelt werden. In diesem Temperaturbereich bildet PTFE durch ein Kompressionsformungsverfahren einen vorgeformten Rohling, der nicht leicht reißt und eine gute Gleichmäßigkeit aufweist und für den anschließenden Sinterprozess vorbereitet wird.

S3: Einlegen des vorgeformten Rohlings in einen Sinterofen, Erhitzen in einer Hochtemperaturumgebung im Ofen, Regeln der Sinterwärmeerhaltungstemperatur auf 330-380 °C, Regeln der Temperaturanstiegs- und -abnahmerate auf 1-10 °C/min, Sinterzeit auf 5-20 Stunden und Beibehalten der Wärmeerhaltungszeit für 2 Stunden und schließlich Erhalten des fertigen Produkts.

Die Wärmeleitfähigkeit des leitfähigen Kohlenstoffs und der Kohlenstofffasern im Nanomaßstab ist aufgrund des Wärmeleitungseffekts der von Polytetrafluorethylen überlegen. Das Polytetrafluorethylen-Verbundmaterial wird gesintert und geformt, und die Zugabe des leitfähigen Kohlenstoffs und der Kohlenstofffasern im Nanomaßstab verbessert wirksam die Wärmeleitfähigkeit des Materials, sodass das Material eine hervorragende Wärmeleitung aufweist, die Grenzflächenbindungskraft zwischen den Rohmaterialien im Prozess erhöht wird und die Dichte und die mechanischen Eigenschaften des Materials deutlich verbessert werden.

Die Temperaturanstiegs- und -abfallraten werden zwischen 1 und 10 °C/min gesteuert, beispielsweise 5 °C/min, 3 °C/min, 6 °C/min und 8 °C/min. Die Temperatur wird langsam erhöht, was sich positiv auf die Ausbeute auswirkt. Da es sich bei dem Produkt um leitfähigen Kohlenstoff im Nanomaßstab handelt und die Temperatur zu schnell ansteigt, kann es leicht zu Produktschäden wie chromatischer Aberration kommen. Bei der formalen Temperaturregelung steigt oder fällt die innere Sintertemperatur kontinuierlich zwischen 340 °C und 370 °C. Liegt die Temperatur beispielsweise unter 340 °C, wird die Temperatur mit einer Geschwindigkeit von 5 °C/min erhöht, bis sie 370 °C erreicht. Anschließend wird die innere Sintertemperatur mit einer Geschwindigkeit von 5 °C/min gesenkt, bis sie 340 °C erreicht. Die innere Sintertemperatur zirkuliert dabei in beide Richtungen. Natürlich ist es auch möglich, die Temperatur auf 350-370 °C einzustellen.

Die Temperatur der Wärmespeicherung wird so geregelt, dass sie stabil bei 370 °C liegt.

In der Anwendung beträgt die Sinterzeit 5-20 Stunden, und der Unterschied der Sinterzeit hängt hauptsächlich vom Volumen des vorgeformten Rohlingskörpers ab, und je größer das Volumen ist, desto länger ist die Sinterzeit.

S4: Je nach erforderlicher Spezifikation und Größe wird das fertige Produkt Feinschneid- und Polierprozessschritten unterzogen und schließlich wird das erforderliche leitfähige Element erhalten.

Der letzte Schritt besteht in der Bearbeitung des gesinterten Endprodukts. Je nach gewünschter Spezifikation und Größe wird das Endprodukt feingeschnitten, poliert und weiteren Prozessschritten unterzogen, um schließlich die gewünschte Heizplatte zu erhalten. Dabei kommen moderne CNC-Bearbeitungsmaschinen zum Einsatz, um die Maßgenauigkeit und Oberflächenqualität des leitfähigen Elements sicherzustellen.

### Spezifisches Beispiel 1:

Ein Herstellungsverfahren für ein leitfähiges Element eines Wellenerdungsrings umfasst die folgenden Schritte:
S1: Mischen von Tetrafluorethylen, Kohlenstofffasern und leitfähigem Kohlenstoff im richtigen Verhältnis, wobei das Material die folgenden Komponenten in Massenanteilen umfasst: 70 Teile PTFE, 10 Teile Kohlenstofffasern und 0,05 Teile leitfähigen Kohlenstoff, dreimaliges Rühren bei hoher Geschwindigkeit in einem Mischer, wobei die Rührzeit jedes Mal auf 45 s eingestellt ist, die Gesamtrührzeit auf 135 s eingestellt ist, die Rührgeschwindigkeit 1500 U/min beträgt und die Siebzeit dreimal beträgt;
S2: Übertragen der gemischten und gerührten Materialien in einen Formhohlraum einer entsprechenden Form, um durch einen Kompressionsformprozess geformt zu werden, Bilden eines vorgeformten Rohlings, Regeln der Formtemperatur auf 24 °C und Regeln des Formdrucks auf 45 MPa;
S3: Einlegen des vorgeformten Rohlings in einen Sinterofen, Erhitzen des vorgeformten Rohlings in einer Hochtemperaturumgebung im Ofen, wobei die Sintertemperatur 350-370 °C beträgt, die Wärmeerhaltungstemperatur 370 °C beträgt, die Heiz- und Kühlraten auf 5 °C/min geregelt werden, die Sinterzeit 5 Stunden beträgt und die Wärmeerhaltungszeit 2 Stunden beträgt, sodass schließlich ein fertiges Produkt erhalten wird;
S4: Je nach erforderlicher Spezifikation und Größe wird das fertige Produkt Feinschneid- und Polierprozessschritten unterzogen und schließlich wird das erforderliche leitfähige Element erhalten.

### Spezifisches Beispiel 2:

S1: Mischen von Tetrafluorethylen, Kohlenstofffasern und leitfähigem Kohlenstoff im Verhältnis, wobei das Material die folgenden Komponenten in Massenteilen umfasst: 80 Teile PTFE, 20 Teile Kohlenstofffasern und 0,1 Teile leitfähigen Kohlenstoff, dreimaliges Rühren bei hoher Geschwindigkeit in einem Mischer, wobei die Rührzeit jedes Mal auf 45 s eingestellt ist, die Gesamtrührzeit auf 135 s eingestellt ist, die Rührgeschwindigkeit 1500 U/min beträgt und die Siebvorgänge dreimal erfolgen;
S2: Übertragen der gemischten und gerührten Materialien in einen Formhohlraum einer entsprechenden Form, um durch einen Kompressionsformprozess geformt zu werden, Bilden eines vorgeformten Rohlings, Regeln der Formtemperatur auf 26 °C und Regeln des Formdrucks auf 45 MPa;
S3: Einlegen des vorgeformten Rohlings in einen Sinterofen, Erhitzen des vorgeformten Rohlings in einer Hochtemperaturumgebung im Ofen, wobei die Sintertemperatur 350-370 °C beträgt, die Wärmeerhaltungstemperatur 370 °C beträgt, die Heiz- und Kühlraten auf 5 °C/min gesteuert werden, die Sinterzeit 5 Stunden beträgt und die Wärmeerhaltungszeit 2 Stunden beträgt, sodass schließlich ein fertiges Produkt erhalten wird;
S4: Je nach erforderlicher Spezifikation und Größe wird das fertige Produkt Feinschneid- und Polierprozessschritten unterzogen und schließlich wird das erforderliche leitfähige Element erhalten.

### Spezifisches Beispiel 3:

S1: Mischen von Tetrafluorethylen, Kohlenstofffasern und leitfähigem Kohlenstoff im richtigen Verhältnis, wobei das Material die folgenden Komponenten in Massenanteilen umfasst: 75 Teile PTFE, 15 Teile Kohlenstofffasern und 0,07 Teile leitfähigen Kohlenstoff, 5-maliges Rühren bei hoher Geschwindigkeit in einem Mischer, wobei die Rührzeit jedes Mal auf 35 s eingestellt ist, die Gesamtrührzeit auf 175 s eingestellt ist, die Rührgeschwindigkeit 1500 U/min beträgt und die Siebvorgänge dreimal erfolgen;
S2: Übertragen der gemischten und gerührten Materialien in einen Formhohlraum einer entsprechenden Form, um durch einen Kompressionsformprozess geformt zu werden, Bilden eines vorgeformten Rohlings, Regeln der Formtemperatur auf 27 °C und Regeln des Formdrucks auf 48 MPa;
S3: Einlegen des vorgeformten Rohlings in einen Sinterofen, Erhitzen des vorgeformten Rohlings in einer Hochtemperaturumgebung im Ofen, wobei die Sintertemperatur 350-370 °C beträgt, die Wärmeerhaltungstemperatur 370 °C beträgt, die Heiz- und Kühlraten auf 8 °C/min geregelt werden, die Sinterzeit 5 Stunden beträgt und die Wärmeerhaltungszeit 2 Stunden beträgt, sodass schließlich ein fertiges Produkt erhalten wird;
S4: Je nach erforderlicher Spezifikation und Größe wird das fertige Produkt Feinschneid- und Polierprozessschritten unterzogen und schließlich wird das erforderliche leitfähige Element erhalten.

### Vergleichsbeispiel 1:

Auf der Grundlage des spezifischen Beispiels 2 wurde die Formtemperatur modifiziert und auf 18 °C geregelt.

Wenn ein Vorformkörper erhalten wird, kommt es zur Rissbildung.

### Vergleichsbeispiel 2:

Auf der Grundlage des spezifischen Beispiels 2 wurde die Formtemperatur modifiziert und auf 33 °C geregelt.

Wenn ein Rohling vorgeformt wird, weist das später verarbeitete Produkt eine geringe Elastizität und Härte auf, obwohl der Rohling keine Risse aufweist.

### Vergleichsbeispiel 3:

Auf der Grundlage der spezifischen Ausführungsform 2 werden die Temperaturanstiegs- und - abfallraten auf 20 °C/min geändert. Das erhaltene Endprodukt weist eine offensichtliche chromatische Aberration auf und das Produkt ist ein disqualifiziertes Produkt.

### Vergleichsbeispiel 4:

Basierend auf der spezifischen Ausführungsform 2 werden die Temperaturanstiegs- und -abfallraten auf 10 ° C /min geändert. Das erhaltene Endprodukt weist nahezu keine chromatische Aberration auf.

Nach der Entnahme der Proben der Beispiele und Vergleichsbeispiele war es notwendig, die Beständigkeit, Zugfestigkeit und Bruchdehnung unter Verwendung des DIN IEC93-Standards sowie die Zugfestigkeit und Bruchdehnung unter Verwendung der Testmethode ATSM-D4894 zu testen.

Der elektrische Widerstand der gemäß den Beispielen 1 - 3 erhaltenen elektrischen Teile betrug nach der Prüfung etwa 20 Ω, die Zugfestigkeit etwa 13,8 und die Bruchdehnung etwa 38,5.

Beim Vergleichsbeispiel 1, das Risse aufweist, wurden weder Widerstandsfähigkeit noch Zugfestigkeit noch Bruchdehnung gemessen;

Vergleichsbeispiel 2, das keine Risse aufwies, aber eine schlechte Elastizität und fast keine Rückverformung aufwies, versagte im Produkt und wurde nicht auf Widerstandsfähigkeit, Zugfestigkeit und Bruchdehnung gemessen.

Vergleichsbeispiel 3, das keine Risse aufwies, aber erhebliche Farbunterschiede zeigte, versagte im Produkt und wurde nicht auf Widerstandsfähigkeit, Zugfestigkeit und Bruchdehnung gemessen.

Vergleichsbeispiel 4, kein Farbunterschied, der Widerstand des leitfähigen Elements betrug etwa 20 Ω, die Zugfestigkeit betrug etwa 13,8 und die Bruchdehnung betrug etwa 38,5.

### Vergleichsbeispiel 3

Den Daten zufolge besteht der kritische Wert bei der Anwendung darin, dass die Formtemperatur streng zwischen 23 °C und 28 °C geregelt wird, um Oberflächenrisse zu vermeiden und eine gewisse Elastizität und Festigkeit nach der Formgebung aufrechtzuerhalten. Zweitens werden beim Sinterprozess die Anstiegs- und Abfallraten zwischen 1 und 10 °C/min geregelt, sodass das Auftreten von chromatischen Aberrationen vermieden werden kann.

Bei allen Komponenten handelt es sich um allgemeine Standardkomponenten oder dem Fachmann bekannte Komponenten, und die Strukturen und Prinzipien der Komponenten sind dem Fachmann aus technischen Handbüchern oder durch routinemäßige experimentelle Methoden bekannt.

Die hier beschriebenen Ausführungsformen dienen lediglich als Beispiel und sollen den Erfindungsgedanken verdeutlichen. Fachleute können die beschriebenen Ausführungsformen modifizieren, ergänzen oder ersetzen, ohne den Erfindungsgedanken zu verlassen oder den in den beigefügten Ansprüchen definierten Schutzumfang zu überschreiten.

## Patentansprüche

1. Ein leitfähiges Element für einen Wellenerdungsring, bestehend aus den folgenden Materialkomponenten nach Masse: 70 - 80 Teile PTFE, 10 - 20 Teile Kohlefaser und 0,05 - 0,1 Teile leitfähiger Kohlenstoff.

2. Ein Verfahren zur Herstellung eines axial geerdeten ringförmigen leitfähigen Elements gemäß Anspruch 1, das die folgenden Schritte umfasst:
S1: Mischen von Tetrafluorethylen, Kohlenstofffasern und leitfähigem Kohlenstoff im richtigen Verhältnis;
S2: Übertragen der gemischten und gerührten Materialien in einen Formhohlraum einer entsprechenden Matrize, Formen durch ein Kompressionsformverfahren und Formen eines vorgeformten Rohlings, wobei die Formtemperatur auf 19-29 °C geregelt wird;
S3: Einlegen des vorgeformten Rohlings in einen Sinterofen, Erhitzen des vorgeformten Rohlings in einer Hochtemperaturumgebung im Ofen,
wobei die Sinterwärmeerhaltungstemperatur 330 - 380 °C beträgt, die Sinterzeit 5 - 20 Stunden und die Wärmeerhaltungszeit 2 Stunden beträgt, und schließlich Erhalten eines fertigen Produkts;
S4: Je nach erforderlicher Spezifikation und Größe wird das fertige Produkt Feinschneid- und Polierprozessschritten unterzogen und schließlich wird das erforderliche leitfähige Element erhalten.

3. Verfahren zur Herstellung eines axial geerdeten ringförmigen leitfähigen Elements nach Anspruch 2,
**dadurch gekennzeichnet, dass** in Schritt S1 das gefrorene, zerkleinerte Tetrafluorethylen in Mikrogröße, die Kohlenstofffaser und der leitfähige Kohlenstoff in Nanogröße im richtigen Verhältnis gemischt werden.

4. Verfahren zur Herstellung eines leitfähigen Elements für eine Wellenerdungsschleife nach Anspruch 3,
**wobei** in Schritt S1 das Rühren in einem Mischer 3 bis 5 Mal bei hoher Geschwindigkeit durchgeführt wird, die Rührzeit jeweils auf 35 bis 45 Sekunden eingestellt ist, die Gesamtzeit auf 120 bis 200 Sekunden eingestellt ist, die Rührgeschwindigkeit 1000 bis 2000 U/min beträgt und die Anzahl der Siebvorgänge 1 bis 4 Mal beträgt.

5. Verfahren zur Herstellung eines axial geerdeten ringförmigen leitfähigen Elements nach Anspruch 2,
**wobei** in Schritt S2 der Formdruck auf 40 MPa bis 50 MPa geregelt wird.

6. Verfahren zur Herstellung eines axial geerdeten Schleifenleitungselements nach Anspruch 3, **wobei** in Schritt S3 die Geschwindigkeit des Temperaturanstiegs und des Temperaturabfalls auf einen Wert zwischen 1 und 10 °C/min geregelt wird.

7. Verfahren zur Herstellung eines axial geerdeten Schleifenleiterelements nach Anspruch 2,
**wobei** in Schritt S2 die Formtemperatur auf 23 - 28 °C geregelt wird.
